# EUROPÄISCHE PATENTSCHRIFT

(11) **EP 1 029 014 B1**
(45) Veröffentlichungstag und Bekanntmachung des Hinweises auf die Patenterteilung: **05.09.2001**
(21) Anmeldenummer: 98954455.6
(22) Anmeldetag: 28.10.1998
(51) Int. Cl.: C09J 11/06, C09J 201/00

(54) **VERBACKUNGSFREIE SCHMELZKLEBSTOFFZUBEREITUNG**
NON-BAKING HOT-MELT ADHESIVE PREPARATION
PREPARATION ADHESIVE THERMOFUSIBLE SANS CUISSON

(30) Priorität: 06.11.1997 DE 19748978
(43) Veröffentlichungstag der Anmeldung: 23.08.2000
(73) Patentinhaber: Henkel Kommanditgesellschaft auf Aktien, 40589 Düsseldorf (DE)
(72) Erfinder: HERLFTERKAMP, Bernhard, D-46236 Bottrop (DE); BEHLER, Ansgar, D-46240 Bottrop (DE)
(86) Internationale Anmeldenummer: EP9806822
(87) Internationale Veröffentlichungsnummer: WO9924521

(56) Entgegenhaltungen:
- EP-A- 0 710 737
- EP-A- 0 800 833
- DATABASE WPI Week 7513 Derwent Publications Ltd., London, GB; AN 75-21607w XP002092922 "Water-soluble hot melt adhesives - contg. ethylene-vinyl-acetate, silica and/or alumina" & JP 49 099730 A (TOYO SODA KK) , 20. September 1974
- DATABASE WPI Week 7438 Derwent Publications Ltd., London, GB; AN 74-66822v XP002092923 "Hot melt adhesive composn. - contg. amorph. olefinn (co)polymer, surfactant, ethylene-vinyl acetate copolymer and petroleum resin" & JP 49 005144 A (TOMODA SADAMICHI) , 17. Januar 1974

## Beschreibung

Die Erfindung betrifft Schmelzklebstoffe ("Hotmelts"), die ein Additiv enthalten und dadurch gegen Anhaften und Vercracken auf beheizten Oberflächen in Auftrags- und Vorratsapparaturen geschützt sind.

Schmelzklebstoffe sind lösungsmittelfreie Klebstoffsysteme, die in geschmolzener, flüssiger Form in der Lage sind, Oberflächen zu benetzen und die nach Abkühlung zu festen Klebeverbindungen erstarren.

Für den Klebstofftechniker bieten Schmelzklebstoffe eine Reihe wichtiger, praktischer Vorteile. So enthalten die Schmelzen im allgemeinen praktisch keine flüchtigen Bestandteile, die bei industriellen Fertigungsvorgängen stören könnten. Weiterhin ist die Abbindungszeit über die Abkühlrate gut steuerbar. Bei raschem Abkühlen sind darüber hinaus sehr kurze Abbindungszeiten zu erhalten, d. h., die Klebeverbindung ist nach kurzer Zeit belastbar.

Aufgrund dieser Vorteile werden Schmelzklebstoffe häufig in Produktionsvorgängen mit kurzen Taktzeiten eingesetzt, so zum Beispiel beim Verpacken von Gütern oder beim Etikettieren von Flaschen und dergleichen. Bei all diesen Verarbeitungsformen wird der Klebstoff in flüssiger Form bevorratet und aufgetragen.

Um die Klebstoffe sicher im flüssigen Bereich zu halten, sind Temperaturen, die zwischen 80 °C und 250 °C liegen, anzuwenden. Wenngleich die technisch eingesetzten Klebstoffsysteme für diesen Temperaturbereich geeignet sind und unter diesen Bedingungen eine gewisse Zeit lagerstabil sind, so bestehen doch Probleme, die damit zusammenhängen, daß Hotmeltauftragsgeräte im Inneren häufig Zonen enthalten, die einerseits beheizt sind, durch die andererseits aber nur geringe Produktmengen strömen. In solchen Zonen und Toträumen kommt es zu längeren Verweilzeiten des Klebstoffes und damit zu längeren Kontaktzeiten zu beheizten Oberflächen. Dies führt häufig dazu, daß an den Oberflächen Verbackungen und Vercrackungen entstehen, die sich im Laufe des Betriebs nach einiger Zeit lösen können, sich dabei an anderen Stellen der Apparatur ansammeln können, Düsen verstopfen können oder mit dem Klebstoff ausgetragen werden und dann zumindest teilweise zu schlechteren Klebeergebnissen führen können.

Vor dem Hintergrund dieses Standes der Technik haben sich die Erfinder die Aufgabe gestellt, eine Schmelzklebstoffzusammensetzung zu schaffen, die derartige Nachteile nicht oder nur in gemindertem Umfang aufweist und dennoch den an derartige Schmelzklebstoffe gestellten Anforderungen genügt. Speziell wollten die Erfinder einen Schmelzklebstoff auf Basis eines Ethylenvinylacetatcopolymeren durch Beigabe eines Additivs, insbesondere eines kationischen Tensids, in der genannten Weise verbessern.

Gegenstand der Erfindung ist somit eine Schmelzklebstoffzubereitung, enthaltend
- 25 bis 99,5 Gew.-% eines thermoplastischen Polymeren mit einem Schmelzbereich zwischen 40 und 250 °C,
- 0 bis 40 Gew.-% eines Harzes zur Klebekraftverstärkung,
- 0 bis 40 Gew.-% eines Wachses zur Viskositätsregulierung,
- 0 bis 5 Gew.-% in Schmelzklebstoffen üblichen Zusatzmitteln,
- 0,1 bis 5 Gew.-% Kationische Tenside
dadurch gekennzeichnet, daß als kationische Tenside Fettsäureester quartärer Ammoniumsalze ("Esterquats") enthalten sind.

Ein weiterer Gegenstand der Erfindung ist ein Verfahren zur Herstellung von Schmelzklebstoffen, bei dem man die geschmolzene Klebstoffmasse mit einer Schmelze oder einer Lösung des Tensids vereinigt und anschließend gewünschtenfalls vorhandenes Lösungsmittel abdestilliert.

Im allgemeinenen Sinne ist Gegenstand der Erfindung die Verwendung von Tensiden zur Vermeidung von Anbackungen von Schmelzklebstoffen an beheizten Flächen von Vorrichtungen zur Auftragung oder Bevorratung derartiger Klebstoffe.

Der der Erfindung zugrundeliegende Effekt wird theoretisch, wissenschaftlich nicht verstanden. Es wird jedoch vermutet, daß die Wirksamkeit der Tenside darauf beruht, daß sie sich an der Phasengrenzfläche also zwischen der Klebstoffmasse und den beheizten Oberflächen ansammeln und so verhindern, daß Polymermoleküle des Klebstoffes selbst mit dieser Oberfläche Verbindungen eingehen, die dann zu den Verbackungen und Vercrackungen führen.

Dabei ist es erstaunlich, daß in der Konkurrenz zwischen der Adsorption der Klebstoffmoleküle und der Tensidmoleküle offenbar die Tenside in einem solchen Maße besser adsorbiert werden als die Makromoleküle, daß der gewünschte Effekt eintreten kann. Dies war für den Fachmann nicht zu erwarten.

In ihrer allgemeinsten Ausführungsform schlägt die Erfindung vor, Tenside in Mengen von 0,1 bis 5 Gew.-% den Schmelzklebstoffrezepturen zuzuschlagen. Dabei ist die genannte Untergrenze von Tensidsystem zu Tensidsystem unterschiedlich. Bei besonders wirksamen Tensidsystemen, zum Beispiel den quartären Ammoniumsalzen, kann sie im Einzelfall sogar noch deutlich unterschritten werden. Die Obergrenze von 5 Gew.-% hingegen ist in bezug auf den Schutz gegen Verbackungen und Vercrackungen unkritisch, d. h. die gewünschten Verarbeitungseigenschaften des Schmelzklebstoffes verbessern sich auch bei höheren Mengen, jedoch kann es bei höheren Tensidzusatzmengen dazu kommen, daß der Klebstoff bei kritischen Anwendungen in seinen klebetechnischen Eigenschaften, also zum Beispiel der Adhesion nachläßt.

Geeignet im Sinne der Erfindung sind Aniontenside, nichtionsiche Tenside, Amphotenside und kationische Tenside. Unter diesen sind die kationischen Tenside bevorzugt.

Im Sinne der Erfindung geeignete Aniontenside sind insbesondere Tenside aus der Klasse der Sulfonate und Sulfate. Geeignet sind beispielsweise Alkylbenzolsulfonate mit 5 bis 15 Kohlenstoffatomen im Alkylrest und alpha-sulfonierte Fettsäuremetylester deren Fettsäureanteil 6 bis 18 Kohlenstoffatomen aufweist. Im Sinne der Erfindung bevorzugt sind Alkylsulfate mit 6 bis 18, insbesondere 8 bis 10 Kohlenstoffatomen im Alkylrest. Im allgemeinen ist es bevorzugt, Mischungen einzusetzen, insbesondere Mischungen die sich hinsichtlich der C-Kettenlängen des hydrophoben Rests unterscheiden. Die einzusetzenden Alkylsulfat können einerseits petrochemischer Natur, andererseits oleochemische Natur sein. Eine weitere wichtige Tensidklasse sind Alkylethersulfate mit einer Alkylkettenlänge von C₈ bis C₁₈ insbesondere C₁₀ bis C₁₆ im Alkylrest und einer Kettenlänge der von Ethylenoxid abgeleiteten Ethereinheit von 1 bis 10 Ethylenoxid Gruppen pro Alkylrest. Die genannten anionischen Tenside liegen zumindest im alkalischen Bereich als Salz vor. Geeignete Gegenionen sind Natrium, Kalium, Ammonium aber auch Amine wie beispielsweise Mono-, Di-, oder Triethanoiamin.

Eine weitere hier geeignete Klasse von Tensiden sind Sarcosinate. Es sind dies zum Beispiel die Amide von Aminosäuren mit Fettsäuren, wobei im Fettsäureanteil eine C-Kettenlänge von 8 bis 18 insbesondere 10 bis 14 einzusetzen ist. Eine weitere Klasse geeigneter anionische Tenside sind die Alkylestersulfonate, die durch Umsetzen von Fettsäureestem, insbesondere Fettsäuremethylester mit SO₃, herstellbar sind. Die genannten Alkylestersulfonate können als solche vorliegen oder in Form der Disalze der Alphasulfofettsäuren.

In den erfindungsgemäßen, Klebstoffen werden Esterquats eingsetzt.

Unter der Bezeichnung "Esterquats" werden im allgemeinen quaternierte Fettsäuretriethanolaminester-salze verstanden. Es handelt sich dabei um bekannte Stoffe, die man nach den einschlägigen Methoden der präparativen organischen Chemie erhalten kann. In diesem Zusammenhang sei auf die Internationale Patentanmeldung **WO 91/01295** (Henkel) verwiesen, nach der man Triethanolamin in Gegenwart von unterphosphoriger Säure mit Fettsäuren partiell verestert, Luft durchleitet und anschließend mit Dimethytsulfat oder Ethylenoxid quaterniert. Aus der Deutschen Patentschrift **DE-C1 4308794** (Henkel) ist überdies ein Verfahren zur Herstellung fester Esterquats bekannt, bei dem man die Quatemierung von Triethanolaminestern in Gegenwart von geeigneten Dispergatoren, vorzugsweise Fettalkoholen, durchführt. Übersichten zu diesem Thema sind beispielsweise von R.Puchta et al. in **Tens.Surf.Det., 30, 186 (1993),** M.Brock **in Tens.Surf.Det. 30, 394 (1993),** R.Lagerman et al. in **J.Am.Oil.Chem.Soc., 71, 97 (1994)** sowie I.Shapiro in **Cosm.Toil. 109,77 (1994)** erschienen.

Die quaternierten Fettsäuretriethanolaminestersalze folgen der Formel **(I),** 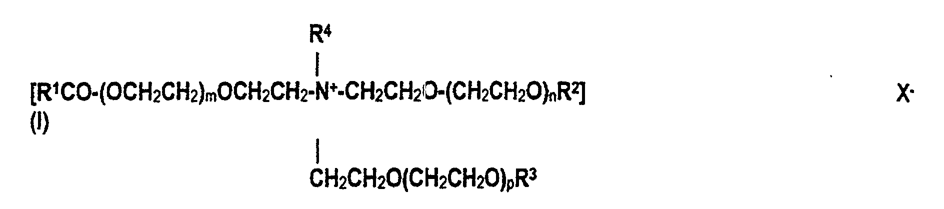 in der R¹CO für einen Acylrest mit 6 bis 22 Kohlenstoffatomen, R² und R³ unabhängig voneinander für Wasserstoff oder R¹CO, R⁴ für einen Alkylrest mit 1 bis 4 Kohlenstoffatomen oder eine (CH₂CH₂O)_{q}H-Gruppe, m, n und p in Summe für 0 oder Zahlen von 1 bis 12, q für Zahlen von 1 bis 12 und X für Halogenid, Alkylsulfat oder Alkylphosphat steht. Typische Beispiele für Esterquats, die im Sinne der Erfindung Verwendung finden können, sind Produkte auf Basis von Capronsäure, Caprylsäure, Caprin-säure, Laurinsäure, Myristinsäure, Palmitinsäure, Isostearinsäure, Stearinsäure, Ölsäure, Elaidinsäure, Arachinsäure, Behensäure und Erucasäure sowie deren technische Mischungen, wie sie beispielsweise bei der Druckspaltung natürlicher Fette und Öle anfallen. Vorzugsweise werden technische C_{12/18}-Kokosfettsäuren und insbesondere teilgehärtete C_{16/18}-Talg- bzw. Palmfettsäuren sowie elaidinsäure-reiche C_{16/18}-Fettsäureschnitte eingesetzt. Zur Herstellung der quaternierten Ester können die Fettsäuren und das Triethanolamin im molaren Verhältnis von 1,1 : 1 bis 3 : 1 eingesetzt werden. Im Hinblick auf die anwendungstechnischen Eigenschaften der Esterquats hat sich ein Einsatzverhältnis von 1,2 : 1 bis 2,2 : 1, vorzugsweise 1,5 : 1 bis 1,9 : 1 als besonders vorteilhaft erwiesen. Die bevorzugten Esterquats stellen technische Mischungen von Mono-, Di- und Triestem mit einem durchschnittlichen Veresterungsgrad von 1,5 bis 1,9 dar und leiten sich von technischer C_{16/18}-Talg- bzw. Palmfettsäure (lodzahl 0 bis 40) ab. Aus anwendungstechnischer Sicht haben sich quaternierte Fettsäuretriethanolaminestersalze der Formel **(I)** als besonders vorteilhaft erwiesen, in der R¹CO für einen Acylrest mit 16 bis 18 Kohlenstoffatomen, R² für R¹CO, R³ für Wasserstoff, R⁴ für eine Methylgruppe, m, n und p für 0 und X für Methylsulfat steht.

Neben den quaternierten Fettsäuretriethanolaminestersalzen kommen als Esterquats ferner auch quaternierte Estersalze von Fettsäuren mit Diethanolalkylaminen der Formel **(II)** in Betracht, 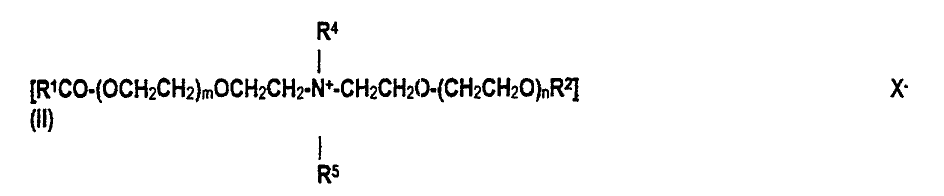 in der R¹CO für einen Acylrest mit 6 bis 22 Kohlenstoffatomen, R² für Wasserstoff oder R¹CO, R⁴ und R⁵ unabhängig voneinander für Alkylreste mit 1 bis 4 Kohlenstoffatomen, m und n in Summe für 0 oder Zahlen von 1 bis 12 und X für Halogenid, Alkylsulfat oder Alkylphosphat steht.

Als weitere Gruppe geeigneter Esterquats sind schließlich die quaternierten Estersalze von Fettsäuren mit 1,2-Dihydroxypropyldialkylaminen der Formel **(III)** zu nennen, 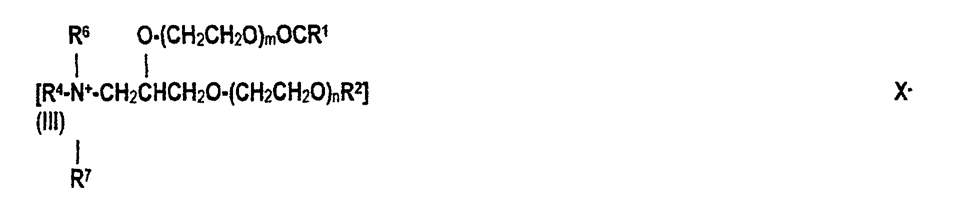 in der R¹CO für einen Acylrest mit 6 bis 22 Kohlenstoffatomen, R² für Wasserstoff oder R¹CO, R⁴, R⁶ und R⁷ unabhängig voneinander für Alkylreste mit 1 bis 4 Kohlenstoffatomen, m und n in Summe für 0 oder Zahlen von 1 bis 12 und X für Halogenid, Alkylsulfat oder Alkylphosphat steht.

Hinsichtlich der Auswahl der bevorzugten Fettsäuren und des optimalen Veresterungsgrades gelten die für **(I)** genannten Beispiele auch für die Esterquats der Formeln **(II)** und **(III)**. Üblicherweise gelangen die Esterquats in Form 50 bis
90 Gew.-%iger alkoholischer Lösungen in den Handel, die bei Bedarf problemlos mit Wasser verdünnt werden können.
1. Esterquats der Formel **(I),** 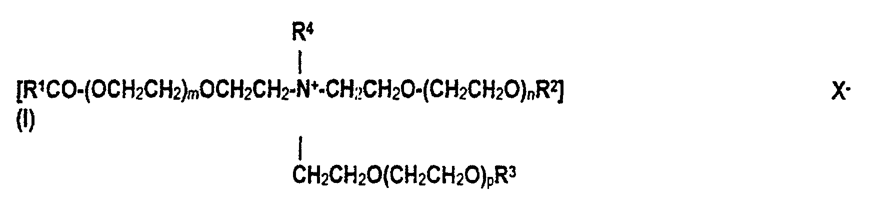 in der R¹CO für einen Acylrest mit 6 bis 22 Kohlenstoffatomen, R² und R³ unabhängig voneinander für Wasserstoff oder R¹CO, R⁴ für einen Alkylrest mit 1 bis 4 Kohlenstoffatomen oder eine (CH₂CH₂O)_{q}H-Gruppe, m, n und p in Summe für 0 oder Zahlen von 1 bis 12, q für Zahlen von 1 bis 12 und X für Halogenid, Alkylsulfat oder Alkylphosphat steht.
2. Esterquats der Formel **(II),** 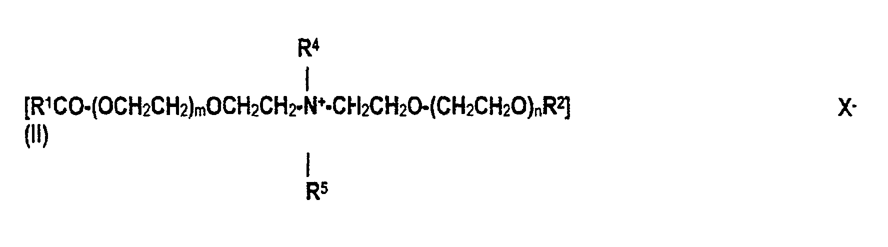 in der R¹CO für einen Acylrest mit 6 bis 22 Kohlenstoffatomen, R² für Wasserstoff oder R¹CO, R⁴ und R⁵ unabhängig voneinander für Alkylreste mit 1 bis 4 Kohlenstoffatomen, m und n in Summe für 0 oder Zahlen von 1 bis 12 und X für Halogenid, Alkylsulfat oder Alkytphosphat steht.
3. Esterquats der Formel **(III)**, 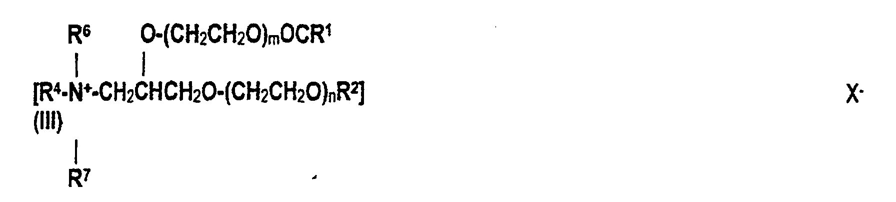 in der R¹CO für einen Acylrest mit 6 bis 22 Kohlenstoffatomen, R² für Wasserstoff oder R¹CO, R⁴, R⁶ und R⁷ unabhängig voneinander für Alkylreste mit 1 bis 4 Kohlenstoffatomen, m und n in Summe für 0 oder Zahlen von 1 bis 12 und X für Halogenid, Alkylsulfat oder Alkylphosphat steht.

Mit Hilfe der genannten Tenside lassen sich zahlreiche bekannte Schmelzklebstoffe in ihren Eigenschaften verbessern.

So können in einer bevorzugten Ausführungsform der Erfindung verbesserte Schmelzklebstoffe auf Basis Ethylenvinylacetatcopolymer (EVA) bereit gestellt werden. Entsprechende Hotmelts sind dem hier angesprochenen Fachmann bekannt. Formulierungsbeispiele finden sich in dem Buch "A Formulary of Adhesives and other Sealants" von M. und I. Ash, Chemical Publishing Co., Inc., New York, 1987, (ISBN 0-8206-0297-3) und dort auf den Seiten 188 ff. Die entsprechenden Produkte bestehen aus hochmolekularen Polymeren aus Ethylen- und Vinylacetat, wobei der Vinylacetatanteil zwischen 10 und 40 Gew.-%, vorzugsweise zwischen 25 und 30 Gew.-% liegt. Üblicherweise werden derartige Klebstoffe modifiziert angeboten, d. h., sie enthalten als Klebkraftverstärker Harze. Geeignete Harze sind beispielsweise Harze auf Colophoniumbasis, zum Beispiel Colophoniumpentaerythritester, aber auch Tallharze oder Ester von Tallharzen sind geeignet. Die Harze dienen dabei der Erhöhung der Klebkraft. Zur Regulierung der Viskosität enthalten die Schmelzklebstoffe darüber hinaus auch häufig Wachse, so zum Beispiel Paraffinwachse. Übliche Formulierunge weisen die folgende Zusammensetzung auf:
25 bis 35 Gew.-% eines Ethylenvinylacetatcopolymeren,
20 bis 40 Gew.-% eines Klebkraftverstärkenden Harzes, zum Beispiel eines Colophoniumharzes,
20 bis 40 Gew.-% eines Wachses zur Viskositätsregulierung,
0,1 bis 5 Gew.-% eines der genannten Tenside und bis zu 5 Gew.-% üblichen Zusatzstoffen von Schmelzklebstoffen.

Eine besonders bevorzugte Ausführungsform der Erfindung schlägt entsprechende Klebstoffe dieser Art vor, die jeweils etwa zu einem Drittel aus Ethylenvinylacetatcopolymer, Harz und Wachs bestehen und 0, 5 bis 5 Gew.-% eines eines Esterquats, enthalten.

Weitere Ausführungsformen der Erfindung sehen mit Tensiden verbesserte Schmelzklebstoffe auf anderer Polymerbasis vor. So können beispielsweise geeignete Schmelzklebstoffe auf Basis von Kautschuk und Harzen und Antioxidantien mit 0,5 bis 5 Gew.-% Tensiden verbessert werden. Geeignete Kautschuktypen sind Polybuten, Polyisobutylen oder Polyisopren. Formulierungsbeispiele kann der Fachmann der eingangs genannten Monografie von M. und I. Ash auf den Seiten 173 ff. entnehmen.

Eine weitere Klasse von Schmelzklebstoffen sind Schmelzklebstoffe auf Basis Ethylen-Vinylacetat, die oftmals Terpenharze und größere Mengen an Paraffinwachs enthalten. Formulierungsbeispiele finden sich in der eingangs genannten Monografie von M. und I. Ash auf den Seite 179 ff.

Weitere durch Tenside zu verbesserte Schmelzklebstoffe sind solche auf Basis von Poly-Styrol-Butadien und Harzen. Formulierungsbeispiele finden sich in der obengenannten Monografie auf der Seite 196. Weitere erfindungsgemäß durch Tenside modifizierbare Hotrnelts sind Produkte auf Basis Polypropylen und Rosinharzen. Formulierungsbeispiele dazu finden sich auf der Seite 201 der obengenannten Monografie von M. und I. Ash. Schließlich können auch Hotmelts auf Basis von Polyamiden modifiziert werden. Ein Formulierungsbeispiel dazu findet sich auf Seite 203 der genannten Monografie von M. und l. Ash.

Schließlich können auch Hotmelts auf Basis von Polyestern etwa auf Basis der Polyester von Glykolen, Diglykolen usw. mit aliphatischen oder aromatischen Dicarbonsäuren, wie inbesondere Phthalsäure erfindungsgemäß durch Tenside modifiziert werden.

Neben den genannten Bestandteilen wie Harzen, Wachsen und den Tensiden als Wirkstoffen können die erfindungsgemäßen Schmelzklebstoffe noch andere in Schmelzklebstoffen übliche Rezepturbestandteile enthalten. Deartige Zusätze sind beispielsweise Stabilisatoren, insbesondere Stabilisatoren vom Typ der Radikalfänger, Füllstoffe, Farbstoffe, organische Lösemittel in kleinen Mengen, Weichmacher und dergleichen.

Bei der Herstellung der erfindungsgemäß mit Tensiden modifizierten Schmelzklebstoffe hat es sich als sinnvoll erwiesen, zunächst die Schmelzklebstoffmischung so hoch zu erwärmen, daß sie zumindest rührbar ist und dann das Tensid als flüssige Phase zuzugeben. Unter flüssiger Phase wird hier verstanden, daß man sowohl eine Schmelze des Tensids als auch eine Lösung zugeben kann. Bei der Zugabe von Lösungen ist es zweckmäßig, das Lösungsmittel durch geeignete Maßnahmen aus der heißen Klebstoffmischungen abdestillieren zu lassen. So kann man zum Beispiel die Tensidlösung so langsam zutropfen, daß in gleichem Maße, wie die Lösung zuläuft, das Lösungsmittel verdampft und abdestilliert.

Die so erhaltenen Schmelzklebstoffe zeigen verminderte Anbackneigung, wenn sie in beheizten Vorrats- und Auftragsvorrichtungen verarbeitet werden. Sie erlauben es, derartige Vorrichtungen länger störungsfrei zu betreiben.

### Beispiele

Durch Zusammenschmelzen der folgenden Komponenten wurde ein Schmelzklebstoff hergestellt:
27,0 Gew.-% EVAcopolymer mit 28 Mol-% Vac-Anteilen
54 Gew.-% eines Colophoniumpentaerythrits
0,5 Gew.-% sterisch gehindertes Phenol als Stabilisator
0,25 Gew.-% Triarylphosphit als Stabilisator
0,5 Gew.-% Methyl-N,N-bis(acyloxyethyl)-N(2-Hydroxyethyl)ammoniummethosulfat (Esterquat) 90%ig in Isopropanol als Tensidzusatz Hartparaffin ad 100 Gew.-%.

Zur Herstellung des Klebstoffes wurden EVAcopolymer, Colophoniumharz und Paraffin vorgelegt und die Mischung aufgeschmolzen und bei einer Temperatur von ca. 120 °C die restlichen Bestandteile zugegeben. Der Schmelzktebstoff hatte bei 160 °C eine Viskosität um 1 Pa.s; der Erweichungspunkt nach AAP-S13 lag zwischen 107 und 115 °C.

### Vergleichsbeispiel:

Es wurde ein eben solcher Schmelzklebstoff hergestellt; jedoch mit der Änderung, daß das Tensid (Esterquat) nicht eingesetzt wurde.

### Anwendungsversuch:

Klebstoff nach Beispiel und Vergleichsbeispiel werden in zwei Klebstoffauftragsmaschinen für die Flaschenetikettierung parallel eingesetzt. Nach einer Betriebsdauer von 5 Tagen mit mehren Anlagenstillständen ist im Falle des Vergleichsklebstoffes das Auftreten gefärbter Teilchen in der Nähe der Austrittsdüse zu beobachten (Vercrackungen, die sich von den geheizten Flächen ablösen und vor der Austrittdüse sammeln). Im Falle des erfindungsgemäßen Klebstoffes ist dies nicht zu beobachten.

## Patentansprüche

1. Schmelzklebstoffzubereitung, enthaltend
- 25 bis 99,5 Gew.-% eines thermoplastischen Polymeren mit einem Schmelzbereich zwischen 40 und 250°C,
- 0 bis 40 Gew.-% eines Harzes zur Klebekraftverstärkung,
- 0 bis 40 Gew.-% eines Wachses zur Viskositätsregulierung,
- 0 bis 5 Gew.-% in Schmelzklebstoffen übliche Zusatzmittel,
- 0,1 bis 5 Gew.-% kationische Tenside
**dadurch gekennzeichnet**, daß als kationische Tenside Fettsäureester quartärer Ammoniumsalze ("Esterquats") enthalten sind.

2. Schmelzklebstoffzubereitung nach Anspruch 1, **dadurch gekennzeichnet**, daß als Polymer ein Ethylenvinylacetatcopolymer (EVA) enthalten ist.

3. Schmelzklebstoffzubereitung nach einem der Ansprüche 1 oder 2, bestehend aus
- 25 bis 35 Gew.-% eines Ethylenvinylacetatcopolymeren,
- 20 bis 40 Gew.-% eines klebkraftverstärkenden Harzes,
- 20 bis 40 Gew.-% eines Wachses zur Viskositätsregulierung,
- 0,1 bis 5 Gew.-% eines Tensides sowie bis zu 5 Gew.-% In Schmelzklebstoffen üblichen Zusatzstoffen.

4. Schmelzklebstoffzubereitungen nach einem der Ansprüche 1 bis 3
**dadurch gekennzeichnet**, daß als Polymer ein Ethylenethylacrylatcopolymer, ein Polyester, ein Polyvinylbutyral und/oder ein Polyisobutylen eingesetzt werden.

5. Verfahren zur Herstellung von Schmelzklebstoffen nach den Ansprüchen 1 bis 4 **dadurch gekennzeichnet**, daß man die geschmolzene Klebstoffmasse mit einer Schmelze oder einer Lösung des Tensids vereinigt und anschließend gewünschtenfalls vorhandenes Lösungsmittel abdestilliert.

6. Verwendung von Tensiden zur Vermeidung von Anbackungen von Schmelzklebstoffen an beheizten Flächen von Vorrichtungen zur Auftragung oder Bevorratung derartiger Klebstoffe.

## Claims

1. A hotmelt adhesive preparation containing
- 25 to 99.5% by weight of a thermoplastic polymer with a melting range of 40 to 250°C,
- 0 to 40% by weight of a resin for increasing bond strength,
- 0 to 40% of a wax for adjusting viscosity,
- 0 to 5% by weight of additives typical of hotmelt adhesives,
- 0.1 to 5% by weight of cationic surfactants,
- **characterized in that** fatty acid esters of quaternary ammonium salts ("esterquats") are present as the cationic surfactants.

2. A hotmelt adhesive preparation as claimed in claim 1, **characterized in that** an ethylene/vinyl acetate copolymer (EVA) is present as the polymer.

3. A hotmelt adhesive preparation as claimed in claim 1 or 2 consisting of
- 25 to 35% by weight of an ethylene/vinyl acetate copolymer,
- 20 to 40% by weight of a resin for increasing bond strength,
- 20 to 40% by weight of a wax for adjusting viscosity,
- 0.1 to 5% by weight of a surfactant and
- up to 5% by weight of additives typical of hotmelt adhesives.

4. Hotmelt adhesive preparations as claimed in any of claims 1 to 3, **characterized in that** an ethylene/ethyl acrylate copolymer, a polyester, a polyvinyl butyral and/or a polyisobutylene is/are used as the polymer.

5. A process for the production of the hotmelt adhesives claimed in claims 1 to 4, **characterized in that** the molten adhesive is combined with a melt or a solution of the surfactant and, if desired, any solvent present is then distilled off.

6. The use of surfactants for avoiding caking of hotmelt adhesives on heated surfaces of equipment for applying or storing such adhesives.

## Revendications

1. Préparation adhésive thermofusible contenant:
- de 25 à 99,5 % en poids d'un polymère thermoplastique ayant une plage de fusion comprise entre 40 et 250°C,
- de 0 à 40 % en poids d'une résine en vue du renforcement de la force d'adhésion,
- de 0 à 40 % en poids d'une cire pour la régulation de la viscosité,
- de 0 à 5 % en poids d'additifs usuels dans les adhésifs thermofusibles,
- de 0,1 à 5 % en poids d'agents tensioactifs cationiques,
**caractérisée en ce que**
comme agents tensioactifs cationiques, des esters d'acide gras de sels d'ammonium quaternaire (esterquats) sont contenus.

2. Préparation adhésive thermofusible selon la revendication 1,
**caractérisée en ce que**
comme polymère un copolymère éthylène/acétate de vinyle (EVA) est contenu.

3. Préparation adhésive thermofusible selon l'une quelconque des revendications 1 ou 2 qui consiste en :
- de 25 à 35 % en poids d'un copolymère éthylène/acétate de vinyle,
- de 20 à 40 % en poids d'une résine qui renforce la force d'adhésion,
- de 20 à 40 % en poids d'une cire pour la régulation de la viscosité,
- de 0,1 à 5 % en poids d'agents tensioactifs mentionnés et jusqu'à 5 % en poids d'additifs usuels d'adhésifs thermofusibles.

4. Préparations adhésives thermofusible, selon l'une quelconque des revendications 1 à 3.
**caractérisées en ce que**
comme polymère on met en oeuvre un copolymère éthylène/acrylate d'éthyle, un polyester, un polyvinylbutyral, et/ou un polylsobutylène.

5. Procédé de préparation d'adhésifs thermofusibles selon l'une quelconque des revendications 1 à 4,
**caractérisé en ce qu**'
on réunit la masse d'adhésif fondue à un produit de fusion ou à une solution de l'agent tensioactif et ensuite si désiré on sépare par distillation le solvant présent.

6. Utilisation des agents tensioactifs en vue d'éviter la formation d'agglomérats d'adhésifs thermofusibles sur les surfaces chauffées des appareils pour l'application ou l'alimentation d'adhésifs de ce type.
